# EUROPEAN PATENT SPECIFICATION

(11) **EP 4 053 738 B1**
(45) Date of publication and mention of the grant of the patent: **22.10.2025**
(21) Application number: 21182895.9
(22) Date of filing: 30.06.2021
(51) Int. Cl.: G06F 18/23, G06N 20/00, G06N 5/01, G06F 18/213

(54) **DETERMINING SIMILAR BEHAVIORAL PATTERN BETWEEN TIME SERIES DATA OBTAINED FROM MULTIPLE SENSORS AND CLUSTERING THEREOF**
BESTIMMUNG EINES ÄHNLICHEN VERHALTENSMUSTERS ZWISCHEN VON MEHREREN SENSOREN ERHALTENEN ZEITREIHENDATEN SOWIE CLUSTERING DAVON
DÉTERMINATION D'UN MODÈLE DE COMPORTEMENT SIMILAIRE ENTRE DES DONNÉES CHRONOLOGIQUES OBTENUES À PARTIR DE PLUSIEURS CAPTEURS ET LEUR REGROUPEMENT

(30) Priority: 03.03.2021 IN 202121008969
(43) Date of publication of application: 07.09.2022
(73) Proprietor: Tata Consultancy Services Limited, Maharashtra (IN)
(72) Inventor: CHATTOPADHYAY, Tanushyam, 700160 Kolkata (IN); DAS, Abhisek, 700160 Kolkata (IN); MISRA, Prateep, 700160 Kolkata (IN); GHOSH, Shubhrangshu, 700160 Kolkata (IN); DUTTA, Suvra, 700160 Kolkata (IN)
(74) Representative: Goddar, Heinz J.

(56) References cited:
- US-A1- 2015 316 666
- US-A1- 2020 082 013
- US-A1- 2021 042 357
- SAMET AYHAN ET AL: "Aircraft Trajectory Prediction Made Easy with Predictive Analytics", PROCEEDINGS OF THE 22ND ACM SIGKDD INTERNATIONAL CONFERENCE ON KNOWLEDGE DISCOVERY AND DATA MINING, KDD '16, ACM PRESS, NEW YORK, NEW YORK, USA, 13 August 2016 (2016-08-13), pages 21 - 30, XP058276776, ISBN: 978-1-4503-4232-2, DOI: 10.1145/2939672.2939694
- SANCHEZ IVAN ET AL: "Fast trajectory clustering using Hashing methods", 2016 INTERNATIONAL JOINT CONFERENCE ON NEURAL NETWORKS (IJCNN), IEEE, 24 July 2016 (2016-07-24), pages 3689 - 3696, XP032992640, DOI: 10.1109/IJCNN.2016.7727674

## Description

### CROSS-REFERENCE TO RELATED APPLICATIONS AND PRIORITY

The present application claims priority to Indian application, Application No. 202121008969, filed in India on March 3, 2021.

### TECHNICAL FIELD

The disclosure herein generally relates to sensor analysis, and, more particularly, to determining similar behavioral pattern between time series data obtained from multiple sensors and clustering thereof.

### BACKGROUND

In manufacturing, such as telemetry, energy, utility, and health care industries, a plethora of sensors are normally attached to a system or human being, respectively. In the last few years, a trend has been observed to apply data analytics on those time series data to get actionable insight. Any such system aims to get the time series and then apply descriptive, predictive, or prognostic analytics to fetch insight to far sight from the data. But in traditional machine learning (ML) based approaches one important aspect is to analyse the feature or the characteristic of the data. In classical approach, feature engineering involves discovering the feature dependency. Similarly, under the scenario of multi-sensor environment there is a need to detect which sensors are behaving similarly within a time span. Moreover, it is not possible for a single domain expert to detect such sensor similarity in a large system where the number of input parameters/ sensor observations are in nearly in the order of 10³. Over and above, the sensor values often vary in different range of values yet depict similar time series characteristic and sometimes the sensors have a phase difference in operation.

Document D1 US2015316666A1 teaches detection of repeating seismic events from long duration seismic data without prior knowledge of event waveforms is performed by computing compact binary fingerprints from seismic data, generating a similarity matrix from the fingerprints, and identifying seismic events from the similarity matrix, e.g., using a thresholding condition. Each element of the similarity matrix is a value representing similarity between a pair of fingerprints, where the value is calculated by hashing fingerprints to hash buckets in multiple hash tables and counting a fraction of the multiple hash tables containing a fingerprint match in the hash buckets. The similarity matrix may be combined with similarity matrices derived from other seismic data to produce a total network similarity matrix, increasing the sensitivity of the detection. Other seismic data may include multiple components recorded at a single station or data recorded at separately located stations.

Document D2 SAMET AYHAN ET AL discloses that at the heart of Air Traffic Management (ATM) lies the Decision Support Systems (DST) that rely upon accurate trajectory prediction to determine how the airspace will look like in the future to make better decisions and advisories. Dealing with airspace that is prone to congestion due to environmental factors still remains the challenge especially when a deterministic approach is used in the trajectory prediction process. In D2, a novel stochastic trajectory prediction approach for ATM that can be used for more efficient and realistic flight planning and to assist airspace flow management, potentially resulting in higher safety, capacity, and efficiency commensurate with fuel savings thereby reducing emissions for a better environment is described. This approach considers airspace as a 3D grid network, where each grid point is a location of a weather observation. D2, hypothetically build cubes around these grid points, so the entire airspace can be considered as a set of cubes. Each cube is defined by its centroid, the original grid point, and associated weather parameters that remain homogeneous within the cube during a period of time. Then, raw trajectories are aligned to a set of cube centroids which are basically fixed 3D positions independent of trajectory data. This creates a new form of trajectories which are 4D joint cubes, where each cube is a segment that is associated with not only spatio-temporal attributes but also with weather parameters. Next, machine learning techniques to train inference models from historical data and apply a stochastic model, a Hidden Markov Model (HMM), to predict trajectories taking environmental uncertainties into account are exploited. During the process, time series clustering to generate input observations are applied from an excessive set of weather parameters to feed into the Viterbi algorithm. The experiments use a real trajectory dataset with pertaining weather observations and demonstrate the effectiveness of this approach to the trajectory prediction process for ATM.

Document D3 US2021042357A1 discloses systems and methods for content quasi-personalization or anonymized content retrieval via aggregated browsing history of a large plurality of devices, such as millions or billions of devices. A sparse matrix may be constructed from the aggregated browsing history, and dimensionally reduced, reducing entropy, and providing anonymity for individual devices. Relevant content may be selected via quasi-personalized clusters representing similar browsing histories, without exposing individual device details to content providers.

Document D4 SANCHEZ IVAN ET AL discloses about explosion in the usage of trajectory data. Clustering is one of the simplest and most powerful approaches for knowledge discovery from trajectories. In order to produce meaningful clusters, well-defined metrics are required to capture the essence of similarity between trajectories. One such distance function is Dynamic Time Warping (DTW), which aligns two trajectories together in order to determine similarity. DTW has been widely accepted as a very good distance measure for trajectory data. However, trajectory clustering is very expensive due to the complexity of the similarity functions, for example, DTW has a high computational cost O(n^2), where n is the average length of the trajectory, which makes the clustering process very expensive. In D4, the use of hashing techniques based on Distance-Based Hashing (DBH) and Locality Sensitive Hashing (LSH) to produce approximate clusters and speed up the clustering process is proposed.

US 2020/082013 A1 (TRIPLET THOMAS [CA] ET AL) 12 March 2020. The document discloses systems and methods for automated feature selection and pattern discovery in multivariate time-series data, particularly from IoT and telecommunications networks.

### SUMMARY

The invention is set out in the appended set of claims.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts a system for determining similar behavioral pattern between time series data obtained from multiple sensors and clustering thereof, in accordance with an embodiment of the present disclosure.
FIG. 2 depicts an exemplary flow chart illustrating a method for determining similar behavioral pattern between time series data obtained from multiple sensors and clustering thereof, using the system of FIG. 1, in accordance with an embodiment of the present disclosure.
FIG. 3 depicts a graphical representation illustrating clustering of a first sensor S1 and a second sensor S2 and corresponding time series data into specific cluster, in accordance with an embodiment of the present disclosure.
FIG. 4 depicts a graphical representation illustrating clustering of a third sensor S3, a fourth sensor S4, a fifth sensor S5, a sixth sensor S6, a seventh sensor S7 and corresponding time series data into another specific cluster, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

In manufacturing, various industries deploy a plethora of sensors wherein these sensors are normally attached to a system or human being, respectively. Any such system aims to get the time series and then apply descriptive, predictive, or prognostic analytics to fetch insight to far sight from the data. But in traditional machine learning (ML) based approaches one important aspect is to analyse the feature or the characteristic of the data. In classical approach, feature engineering involves discovering the feature dependency. Similarly, under the scenario of multi-sensor environment there is a need to detect which sensors are behaving similarly within a time span. Moreover, it is not possible for a single domain expert to detect such sensor similarity in a large system where the number of input parameters/ sensor observations are in nearly in the order of 10³. Over and above, the sensor values often vary in different range of values yet depict similar time series characteristic and sometimes the sensors have a phase difference in operation. Conventional methods such as (i) Brute force-based method to plot pair wise time series graphs and get manual intervention to detect the similarity, (ii) Dendrogram based approach to find the sensor similarity wherein it fails when similar pattern is observed but the amplitude of the sensor observations is residing in different scale of values. But even in a multi-disciplinary analysis, sometimes these types of dependencies are being overlooked by any domain expert. Embodiments of the present disclosure provide systems and methods for determining similar behavioral pattern between time series data obtained from multiple sensors and clustering thereof. More specifically, system of the present disclosure implements a pattern recognition-based approach to find the similarity and then applies a Dynamic Programming (DP) based approach to detect the similarity in at least two time series data even when the time series data are out of phase and then cluster the sensors and corresponding time series data from various sensors into specific cluster(s). By implementing the DP based approach, the system proves to be computationally efficient, and makes the system highly scalable.

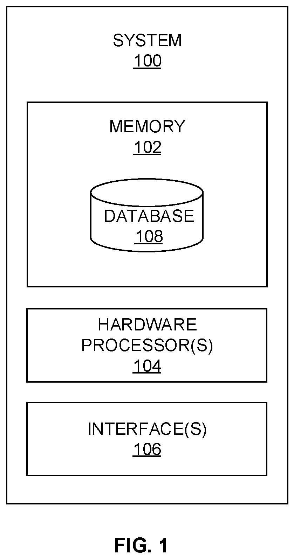

Referring now to the drawings, and more particularly to FIG. 1 through 4, where similar reference characters denote corresponding features consistently throughout the figures, there are shown preferred embodiments and these embodiments are described in the context of the following exemplary system and/or method.

FIG. 1 depicts a system 100 for determining similar behavioral pattern between time series data obtained from multiple sensors and clustering thereof, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises one or more set of time series data captured by one or more sensors attached to various equipment/ (or devices) deployed and being operated in an industry, or computing systems, or any other location. The database 108 further stores information on first order derivative over time being computed, gradient of change in value of the one or more sensors, derived angle of change in direction with associated measurement unit, details of alphanumeric codes assigned to each sensor or time-series data, set of sensors having similar time series pattern, sparse matrix, similarity score computed for the set of sensors, sensors and time-series data being clustered into one or more clusters.

The information stored in the database 108 further comprises various techniques such as edit distance technique as known in the art, depth first search (DFS) technique(s) as known in the art, and the like. The above-mentioned techniques comprised in the memory 102/database 108 are invoked as per the requirement by the system 100 to perform the methodologies described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

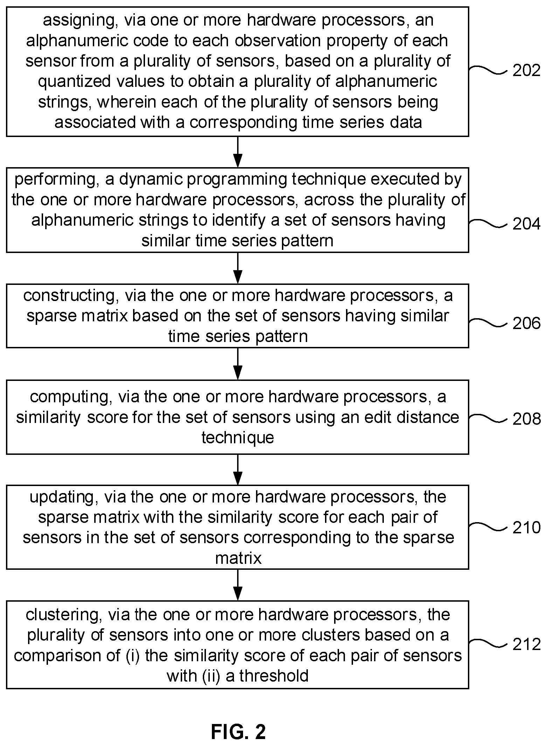

FIG. 2, with reference to FIG. 1, depicts an exemplary flow chart illustrating a method for determining similar behavioral pattern between time series data obtained from multiple sensors and clustering thereof, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2. In an embodiment, at step 202 of the present disclosure, the one or more hardware processors 104 assign an alphanumeric code to each observation property of each sensor from a plurality of sensors, based on a plurality of quantized values to obtain a plurality of alphanumeric strings. Each of the plurality of sensors being associated with a corresponding time series data. The step of assigning an alphanumeric code to each observation property of each sensor comprises obtaining a plurality of time series data from the plurality of sensors; computing a first order derivative over time using the obtained plurality of time series data; computing a gradient of change in value of the plurality of sensors over time based on the first order derivative; deriving an angle of change in direction based on the gradient of change in value of the plurality of sensors over time, and converting the derived angle to a measurement unit; and quantizing each time series data of the plurality of time series data into a plurality of bins based on the measurement unit, each of the plurality of bins corresponds to a quantized value; and assigning the alphanumeric code to each observation property of each sensor from the plurality of sensors based on the plurality of bins. The step of assigning an alphanumeric code can be better understood by way of following description. At first a plurality of time series data is obtained from the plurality of sensors. In an embodiment, at step 202 of the present disclosure, the one or more hardware processors 104 obtain the plurality of time series data corresponding to one or more sensors attached to (or internally connected to) at least one computing device. In an embodiment, the at least one computing device is an Internet of Things (IoT) sensing device. Example of the IoT sensing device, includes but is not limited to, computer systems, mobile communication devices, routers, televisions, and the like. Example of time series data obtained from one or more (or various sensors) is depicted in below tables, Table 1 and 2, respectively.

**Table 1**

| Time stamp | Sensor S1 | Sensor S2 |
|---|---|---|
| 2205565.5 | 857483082.7 | 5448882986 |
| 2205565.5 | 901394976.4 | 6044886966 |
| 2205565.5 | 917497280.6 | 6143120101 |
| 2205565.5 | 952264031.6 | 6189056736 |
| 2205565.5 | 864257553.5 | 5567165024 |
| 2205565.5 | 950307149.8 | 6446396593 |
| 2205565.5 | 906683166.6 | 5859962840 |
| 2205565.5 | 892435483.2 | 5832552708 |
| 2205565.5 | 864422203.8 | 5683251237 |
| 2205565.5 | 909378630.6 | 6050415766 |
| 2205565.5 | 861532061.1 | 5719686291 |
| 2205565.5 | 884042423.8 | 5726315186 |
| 2205565.5 | 914984627 | 5964280917 |
| 2205565.5 | 918403145.1 | 6480776980 |
| 2205565.5 | 979584431 | 6907433507 |
| 2205565.5 | 1001604793 | 7208209871 |
| 2205565.5 | 0 | 0 |

**Table 2**

| Time stamp | Sensor S3 | Sensor S4 | Sensor S5 | Sensor S6 | Sensor S7 |
|---|---|---|---|---|---|
| 2205565. 5 | 111970325 7 | 1920160000 00 | 8415214202 9 | 19306300000 00 | 135205245 26 |
| 2205565. 5 | 118899578 9 | 2367520000 00 | 1104060000 00 | 19438200000 00 | 143775176 51 |
| 2205565. 5 | 147331887 6 | 2462340000 00 | 1194080000 00 | 20438300000 00 | 168004533 57 |
| 2205565. 5 | 108999330 3 | 2434090000 00 | 1149800000 00 | 19898400000 00 | 165209867 56 |
| 2205565. 5 | 109344141 2 | 2191100000 00 | 1088540000 00 | 19354900000 00 | 126347144 56 |
| 2205565. 5 | 993463299 .1 | 2272250000 00 | 1084180000 00 | 21939500000 00 | 184776785 34 |
| 2205565. 5 | 965774693 .6 | 2567090000 00 | 1211170000 00 | 20793800000 00 | 160969678 59 |
| 2205565. 5 | 116583985 2 | 2487760000 00 | 1164760000 00 | 20509300000 00 | 163658501 95 |
| 2205565. 5 | 112797942 5 | 2114520000 00 | 9386132588 8 | 19445500000 00 | 141151300 18 |
| 2205565. 5 | 104302017 8 | 2398780000 00 | 1179940000 00 | 19442800000 00 | 134091929 70 |
| 2205565. 5 | 121420920 3 | 2313450000 00 | 1132820000 00 | 19636900000 00 | 153634927 41 |
| 2205565. 5 | 991292553 .1 | 2105110000 00 | 1023950000 00 | 19721800000 00 | 143141773 84 |
| 2205565. 5 | 107985424 5 | 2278050000 00 | 1122810000 00 | 20119900000 00 | 143191667 19 |
| 2205565. 5 | 110856438 7 | 3092770000 00 | 1399880000 00 | 22596300000 00 | 211241121 76 |
| 2205565. 5 | 105174258 2 | 2648060000 00 | 1236320000 00 | 20503200000 00 | 171201330 27 |
| 2205565. 5 | 155954448 9 | 2869440000 00 | 1433050000 00 | 23343700000 00 | 222636171 16 |
| 2205565. 5 | 0 | 2746720000 00 | 1405240000 00 | 24221800000 00 | 258778798 47 |

The sensors S1 and S2 corresponds to sensors values for as load_miss_completed_2M and load_miss_completed_4K respectively, wherein a load-miss refers to when a processor needing to fetch data from main memory, but data does not exist in the cache. Similar, sensor S3 corresponds to sensor values/time series data for ARITH_INST_RET_SCALAR (e.g., arithmetic instructions return scalar). For the sake of brevity, other sensors S3 through S7 are not specified or described. However, it is to be understood that these sensor names can be specified as mentioned for sensors S1 and S2 and such sensor listings shall not be construed as limiting the scope of the present disclosure. Once the above time series data is obtained from various sensors, a first order derivative over time is computed using the obtained plurality of time series data. The first order derivative is computed if the sensor records which stores the cumulative data as δs: δs = Sₙ-Sₙ₋₁ indicates the consumption of the physical property sensed by that specific sensor. The difference of sensor observation at the first two-time stamps is 43911893.65278. Hence the change in value is obtained by computing the difference in the sensor observation in two consecutive time stamps. Below tables Table 3 and 4 illustrate example of the first order derivative being computed over time using the obtained input time series data.

**Table 3**

| Time stamp | First order derivative for sensor S1 | First order derivative for sensor S2 |
|---|---|---|
| 2205565.5 | 43911893.65 | 596003980.5 |
| 2205565.5 | 16102304.25 | 98233135 |
| 2205565.5 | 34766751 | 45936634.63 |
| 2205565.5 | -88006478.13 | -621891711.4 |
| 2205565.5 | 86049596.31 | 879231568.9 |
| 2205565.5 | -43623983.19 | -586433753.6 |
| 2205565.5 | -14247683.44 | -27410131.37 |
| 2205565.5 | -28013279.37 | -149301471.1 |
| 2205565.5 | 44956426.81 | 367164528.3 |
| 2205565.5 | -47846569.5 | -330729474.2 |
| 2205565.5 | 22510362.69 | 6628894.187 |
| 2205565.5 | 30942203.19 | 237965731.1 |
| 2205565.5 | 3418518.063 | 516496063.3 |
| 2205565.5 | 61181285.94 | 426656527.2 |
| 2205565.5 | 22020361.56 | 300776364 |
| 2205565.5 | -1001604793 | -7208209871 |

**Table 4**

| Time stamp | First order derivative for sensor S3 | First order derivative for sensor S4 | First order derivative for sensor S5 | First order derivative for sensor S6 | First order derivative for sensor S7 |
|---|---|---|---|---|---|
| 2205565. 5 | 69292531.6 9 | 4473616401 7 | 2625370185 6 | 13185676712 | 856993124. 4 |
| 2205565. 5 | 284323087. 2 | 9481577644 | 9002112375 | 10001377741 9 | 242293570 6 |
| 2205565. 5 | - 383325572. 5 | - 2824663576 | - 4428045337 | - 53994813593 | - 279466600. 4 |
| 2205565. 5 | 3448108.62 5 | - 2429947648 5 | - 6126280920 | - 54351733515 | - 388627230 1 |
| 2205565. 5 | -99978113 | 8115191562 | - 435460994. 2 | 25846426734 4 | 584296407 9 |
| 2205565. 5 | - 27688605.5 | 2948466188 3 | 1269837867 4 | - 11457257317 7 | - 238071067 6 |
| 2205565. 5 | 200065158. 7 | - 7933124251 | - 4640178939 | - 28443436727 | 268882336. 6 |
| 2205565. 5 | - 37860426.8 8 | - 3732457443 8 | - 2261504285 5 | - 10638720420 2 | - 225072017 7 |
| 2205565. 5 | - 84959247.7 5 | 2842630955 1 | 2413290884 4 | -270190892.1 | - 705937047. 4 |
| 2205565. 5 | 171189025. 8 | - 8533033585 | - 4712227578 | 19412045786 | 195429977 1 |
| 2205565. 5 | - 222916650. 2 | - 2083434127 1 | - 1088651123 8 | 8492592692 | - 104931535 7 |
| 2205565. 5 | 88561691.5 6 | 1729439507 3 | 9885822556 | 39812299903 | 4989335.56 3 |
| 2205565. 5 | 28710141.8 7 | 8147152966 0 | 2770642944 4 | 24763503400 3 | 680494545 7 |
| 2205565. 5 | - 56821804.3 7 | - 4447061878 7 | - 1635562438 7 | - 20930665612 1 | - 400397914 9 |
| 2205565. 5 | 507801906. 8 | 2213786259 6 | 1967270767 0 | 28405218376 4 | 514348408 9 |
| 2205565. 5 | - 155954448 9 | - 1227143131 6 | - 2781283232 | 87807905075 | 361426273 1 |

A gradient of change in value of the plurality of time series data associated with the one or more sensors over time is computed based on the first order derivative. In an embodiment, the gradient of change in the value is computed based on one or more parameters of the one or more sensors associated with the computing device (e.g., the computer system). The one or more parameters comprise, but are not limited to, time, and the like. For instance, a sensor associated with information on (or time series data associated with) memory consumption is considered, wherein parameters could be memory read/write instructions, number of read/write instructions at various time instances, time taken to execute read/write instructions, and the like. In such scenarios, the gradient of change in value of the plurality of time series data associated with the one or more sensors over time is computed based on a difference in time taken to execute read/write instructions, in one embodiment of the present disclosure. For example, the gradient of change in value of the plurality of time series data associated with the one or more sensors over time is computed between a first time instance (e.g., say at 4.10 PM - time taken to execute read/write instructions is 'x' seconds or milliseconds) and a second time instance (e.g., say at 4.15 PM - time taken to execute read/write instructions is 'y' seconds or milliseconds), wherein value of 'x' is one of greater than, equal to, or less than value of 'y'. The gradient of change in value of the plurality of time series data associated with the one or more sensors over time is computed based on a change observed in memory consumption for read/write instructions, in another embodiment of the present disclosure. In case of other devices such as water pump, the gradient of change in the value is computed based on difference of diameter of the water pump and difference of time). In case of other IoT devices, such as an aerial vehicle (e.g., aircraft, drone, unmanned aerial, vehicles, and the like) the parameters of such vehicles include, altitude, GPS locations. Further example of devices includes land vehicles (e.g., a car). In such examples, parameters of the devices include, throttle position, torque, engine RPM. The gradient of change in the value is computed based on difference in throttle positions for each sensor and/or time instance.

Further, an angle of change in direction is derived based on the gradient of change in value of the plurality of sensors over time, and the derived angle is converted to a measurement unit. The above step is better understood by way of following description. If the first order difference is x and the time series data is sampled at every one unit of time, then the gradient also becomes x. As discussed above, now the theta is obtained as: theta = arc tan (x). Below Table 5 illustrates example of conversion of the derived angle to a measurement unit (e.g., theta):

**Table 5**

| 1st order Diff (or derivative for S1 | Measurement unit (theta) for S1 | 1st order Diff (or derivative for S2 | Measurement unit (theta) for S2 |
|---|---|---|---|
| 43911893.65 | 89.9999363 | 596003980.5 | 89.99999673 |
| 16102304.25 | 89.99982362 | 98233135 | 89.99997237 |
| 34766751 | 89.99991913 | 45936634.63 | 89.99993917 |
| -88006478.13 | -89.99996898 | -621891711.4 | -89.99999693 |
| 86049596.31 | 89.99996824 | 879231568.9 | 89.99999828 |
| -43623983.19 | -89.99993587 | -586433753.6 | -89.99999665 |
| -14247683.44 | -89.99980046 | -27410131.37 | -89.99989702 |
| -28013279.37 | -89.99989927 | -149301471.1 | -89.99998235 |
| 44956426.81 | 89.99993781 | 367164528.3 | 89.99999373 |
| -47846569.5 | -89.99994166 | -330729474.2 | -89.99999287 |
| 22510362.69 | 89.99987427 | 6628894.187 | 89.99956937 |
| 30942203.19 | 89.99990895 | 237965731.1 | 89.9999895 |
| 3418518.063 | 89.99916351 | 516496063.3 | 89.99999599 |
| 61181285.94 | 89.99995471 | 426656527.2 | 89.99999482 |
| 22020361.56 | 89.99987144 | 300776364 | 89.99999201 |
| -1001604793 | -89.99999868 | -7208209871 | -90.00000114 |

For the sake of brevity, theta or the measurement unit is not depicted for other sensors (S3 through S7). However, such depiction shall not be construed as limiting the scope of the present disclosure. Further, the one or more hardware processors 104 quantize the plurality of time series data into a plurality of bins based on the measurement unit to obtain a plurality of alphanumeric strings. Each bin from the plurality of bin is referred as an alphanumeric string. Each of the plurality of alphanumeric strings is tagged to or associated with a corresponding time series data (also referred as 'sensor property' or 'sensor observation' of the plurality of time series data obtained from corresponding sensors. Below Table 6 illustrates example of the plurality of bins obtained by quantizing the plurality of time series data based on the measurement unit (theta). Each of the plurality of bins corresponds to a quantized value. The expression 'plurality of bins' may be referred as 'the plurality of alphanumeric codes', or 'code' and interchangeably used herein.

**Table 6**

| Cod e of S1 | Cod e of S2 | Cod e of S3 | Cod e of S4 | Cod e of S5 | Cod e of S6 | Cod e of S7 | Cod e of S8 | Cod e of S9 | Cod e of S10 | Cod e of S11 | Cod e of S12 | Cod e of Sn |
|---|---|---|---|---|---|---|---|---|---|---|---|---|
| j | j | j | J | J | j | j | e | f | j | j | A | j |
| j | j | j | J | J | j | j | f | e | j | a | a | j |
| j | j | a | A | a | a | a | e | f | a | a | j | j |
| a | a | j | J | j | j | j | f | f | j | a | a | a |
| j | j | a | A | a | a | a | e | e | i | J | J | j |
| a | a | a | A | a | a | a | f | f | a | a | a | a |
| a | a | j | J | j | j | j | f | e | j | j | j | j |
| a | a | a | A | a | a | a | e | f | j | a | a | a |
| j | j | a | A | a | a | a | f | f | a | j | j | j |
| a | a | j | J | j | j | j | e | f | j | c | j | j |
| j | j | a | A | a | a | a | f | f | h | i | j | a |
| j | j | j | J | j | j | j | f | e | j | c | a | j |
| j | j | j | J | j | j | j | e | f | j | j | a | j |
| j | j | a | A | a | a | a | f | f | h | g | j | j |
| j | j | j | J | j | j | j | e | e | a | a | j | a |
| a | a | a | A | a | a | a | e | e | a | a | a | a |

The step of assigning the alphanumeric code to each sensor observation property from the plurality of sensors comprising the steps of (i) obtaining a plurality of time series data from the plurality of sensors; (ii) computing a first order derivative over time using the obtained plurality of time series data; (iii) computing a gradient of change in value of the plurality of sensors over time based on the first order derivative; (iv) deriving an angle of change in direction based on the gradient of change in value of the plurality of sensors over time, and converting the derived angle to a measurement unit; and (v) quantizing each time series data of the plurality of time series data into a plurality of bins based on the measurement unit to obtain a plurality of alphanumeric strings can be further referred from Applicant's patent specification titled 'SYSTEMS AND METHODS FOR DETERMINING OCCURRENCE OF PATTERN OF INTEREST IN TIME SERIES DATA' with application number 202121001728, filed on January 13, 2021 with India Patent Office.

At step 204 of the present disclosure, the one or more hardware processors 104 perform a dynamic programming technique across the plurality of alphanumeric strings to identify a set of sensors having similar time series pattern. For instance, the plurality of alphanumeric strings of each sensor is compared with the plurality of alphanumeric strings obtained for other sensors. The comparison results in obtaining longest common subsequence (LCS) length between any 2 sensors across the sensors. The LCS length depicts the number of strings overlapping between the 2 sensors under consideration during comparison. Below table 7 depicts comparison of sensors for determining the set of sensors having similar time series pattern.

**Table 7**

| Sensor | Compared with | LCS length |
|---|---|---|
| Sensor S1 | Sensor S2 | 16 |
| Sensor S1 | Sensor S3 | 13 |
| Sensor S1 | Sensor S4 | 13 |
| Sensor S1 | Sensor S5 | 13 |
| Sensor S1 | .... | |
| Sensor S1 | Sensor Sn | 14 |
| Sensor S2 | Sensor S3 | 13 |
| ... | ... | ... |
| Sensor S2 | Sensor Sn | 14 |
| ... | ... | ... |
| Sensor Sn | Sensor Sn-1 (or sensor Sm) | 12 |

At step 206 of the present disclosure, the one or more hardware processors 104 construct a sparse matrix based on the set of sensors having similar time series pattern. In an embodiment, sparse matrix refers to a matrix that comprises values of LCS length. Below Table 8 illustrates an example of the sparse matrix:

**Table 8**

| | S1 | S2 | S3 | S4 | S5 | S6 | S7 | S8 | S9 | S10 | S11 | S12 | Sn |
|---|---|---|---|---|---|---|---|---|---|---|---|---|---|
| S1 | 0 | 16 | 0 | 0 | 0 | 0 | 0 | 0 | 0 | 0 | 0 | 0 | 0 |
| S2 | 0 | 0 | 0 | 0 | 0 | 0 | 0 | 0 | 0 | 0 | 0 | 0 | 0 |
| S3 | 0 | 0 | 0 | 16 | 16 | 16 | 16 | 0 | 0 | 0 | 0 | 0 | 0 |
| S4 | 0 | 0 | 0 | 0 | 16 | 16 | 16 | 0 | 0 | 0 | 0 | 0 | 0 |
| S5 | 0 | 0 | 0 | 0 | 0 | 16 | 16 | 0 | 0 | 0 | 0 | 0 | 0 |
| S6 | 0 | 0 | 0 | 0 | 0 | 0 | 16 | 0 | 0 | 0 | 0 | 0 | 0 |
| S7 | 0 | 0 | 0 | 0 | 0 | 0 | 0 | 0 | 0 | 0 | 0 | 0 | 0 |
| S8 | 0 | 0 | 0 | 0 | 0 | 0 | 0 | 0 | 0 | 0 | 0 | 0 | 0 |
| S9 | 0 | 0 | 0 | 0 | 0 | 0 | 0 | 0 | 0 | 0 | 0 | 0 | 0 |
| S10 | 0 | 0 | 0 | 0 | 0 | 0 | 0 | 0 | 0 | 0 | 0 | 0 | 0 |
| S11 | 0 | 0 | 0 | 0 | 0 | 0 | 0 | 0 | 0 | 0 | 0 | 0 | 0 |
| S12 | 0 | 0 | 0 | 0 | 0 | 0 | 0 | 0 | 0 | 0 | 0 | 0 | 0 |
| Sn | 0 | 0 | 0 | 0 | 0 | 0 | 0 | 0 | 0 | 0 | 0 | 0 | 0 |

At step 208 of the present disclosure, the one or more hardware processors 104 compute a similarity score for the set of sensors using an edit distance technique. At step 210 of the present disclosure, the one or more hardware processors 104 update the sparse matrix with the similarity score for each pair of sensors in the set of sensors corresponding to the sparse matrix. Below Table 9 illustrates an example of the updated sparse matrix with similarity score for each pair of the sensors in the set of sensors having similar time series pattern:

**Table 9**

| | S1 | S2 | S3 | S4 | S5 | S6 | S7 | S8 | S9 | S10 | S11 | S12 | Sn |
|---|---|---|---|---|---|---|---|---|---|---|---|---|---|
| S1 | 0 | 0.95 | 0 | 0 | 0 | 0 | 0 | 0 | 0 | 0 | 0 | 0 | 0 |
| S2 | 0 | 0 | 0 | 0 | 0 | 0 | 0 | 0 | 0 | 0 | 0 | 0 | 0 |
| S3 | 0 | 0 | 0 | 0.95 | 0.95 | 0.95 | 0.95 | 0 | 0 | 0 | 0 | 0 | 0 |
| S4 | 0 | 0 | 0 | 0 | 0.95 | 0.95 | 0.95 | 0 | 0 | 0 | 0 | 0 | 0 |
| S5 | 0 | 0 | 0 | 0 | 0 | 0.95 | 0.95 | 0 | 0 | 0 | 0 | 0 | 0 |
| S6 | 0 | 0 | 0 | 0 | 0 | 0 | 0.95 | 0 | 0 | 0 | 0 | 0 | 0 |
| S7 | 0 | 0 | 0 | 0 | 0 | 0 | 0 | 0 | 0 | 0 | 0 | 0 | 0 |
| S8 | 0 | 0 | 0 | 0 | 0 | 0 | 0 | 0 | 0 | 0 | 0 | 0 | 0 |
| S9 | 0 | 0 | 0 | 0 | 0 | 0 | 0 | 0 | 0 | 0 | 0 | 0 | 0 |
| S10 | 0 | 0 | 0 | 0 | 0 | 0 | 0 | 0 | 0 | 0 | 0 | 0 | 0 |
| S11 | 0 | 0 | 0 | 0 | 0 | 0 | 0 | 0 | 0 | 0 | 0 | 0 | 0 |
| S12 | 0 | 0 | 0 | 0 | 0 | 0 | 0 | 0 | 0 | 0 | 0 | 0 | 0 |
| Sn | 0 | 0 | 0 | 0 | 0 | 0 | 0 | 0 | 0 | 0 | 0 | 0 | 0 |

The steps 206 till 210 are better understood by way of the following description. A Dynamic programming-based approach (e.g., an optimum parenthesis) is performed across the plurality of alphanumeric strings to obtain the LCS between the strings of two different time series within a given span of time. Let the total time span under consideration be 'm' and the LCS of two time series data (TS) is 'p', then the matching/similarity score is defined as p* 100/m. Two TS to be similar in nature if their similarity score is greater than a predefined threshold (τ) defined by the user. In one scenario of the present disclosure, τ=95% as described above in the updated sparse matrix. A highly sparse kxk matrix is obtained where k is the number of sensors. In one typical realization, a Levenshtein distance was used by embodiment of the present disclosure to compute the distance between two TS and determine the LCS length.

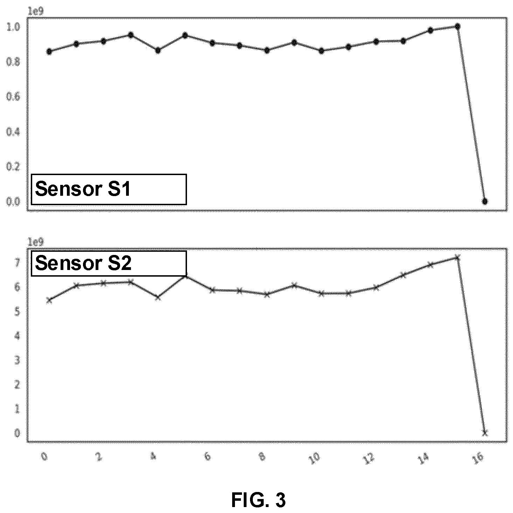

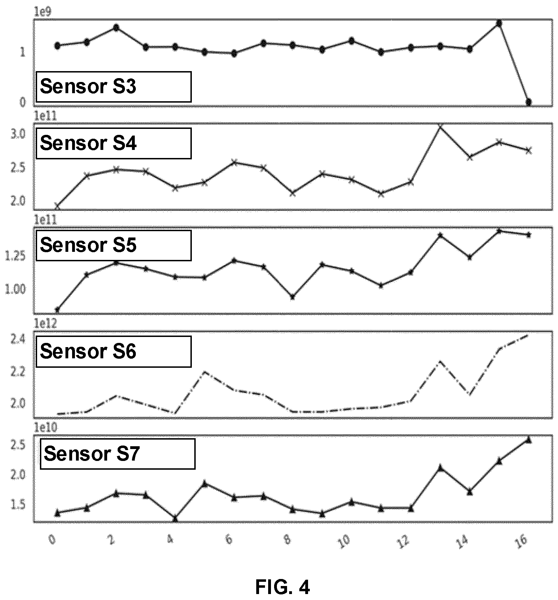

At step 212 of the present disclosure, the one or more hardware processors 104 cluster the plurality of sensors into one or more clusters based on a comparison of (i) the similarity score of each pair of sensors with (ii) a threshold. In an embodiment, the step of clustering comprises identifying two or more sensors from the plurality of sensors based on a dependency factor and clustering the two or more sensors into a specific cluster. Dependency factor for example, includes, which sensor is dependent on (or associated with) another sensor. Based on the above updated sparse matrix, it was observed that sensor S1 is having time series pattern similar to that of sensor S2. Therefore, sensors S1 and S2 were clustered into one group or cluster. However, it may be observed that sensor S3 had a time series data similar to that of the sensor S4. It was further observed that S4 had a dependency over sensor S5 and S5 had dependency over S6 and S6 over S7. Therefore, S3 is indirectly dependent on S7. Thus, sensors S3 through S7 may be clustered into one cluster (or group). In an embodiment, the threshold is a pre-defined threshold or an empirically determined threshold. For instance, threshold say, x% (e.g., 95%) of maximum possible rows present in a dataset (e.g., time series data). In other words, value of 'x' is configurable. Identification of the sensors for clustering is performed using a search technique, in one embodiment of the present disclosure. The search technique, in one example is a depth first search (DFS) technique. FIGS. 3 and 4, depict graphical representations illustrating clustering of sensors and corresponding time series data into specific clusters, in accordance with an embodiment of the present disclosure. More specifically, FIG. 3, with reference to FIGS. 1 through 2, depicts a graphical representation illustrating clustering of a first sensor S1 and a second sensor S2 and corresponding time series data into specific cluster, in accordance with an embodiment of the present disclosure. FIG. 4, with reference to FIGS. 1 through 3, depicts a graphical representation illustrating clustering of a third sensor S3, a fourth sensor S4, a fifth sensor S5, a sixth sensor S6, a seventh sensor S7 and corresponding time series data into another specific cluster, in accordance with an embodiment of the present disclosure. The step 212 and the graphical representations may be better understood by way of following description.

All the pairs of sensors that have a similarity score greater than equal to the pre-defined value of τ (or threshold as mentioned herein) are listed. A tuple of 3 entities, namely sensor pair identifiers (IDs) and the similarity score has been defined for each non-zero entry of the sparse matrix defined in the above steps. A tuple (Si, Sj) is defined to be connected if and only if (Si, Sj) > τ. A new label (λ) is assigned to each connected pair of sensors. The depth first search technique is applied to all the sensors to identify one or more sensors connected with sensor Si with the similar label λ. If (Si, Sj) and (Sj , Sk) are pair wise connected, then (Si , Sk) is defined to be connected and the same label is assigned to all of these sensors Si , Sj, and Sk, respectively, thus achieving clusters of sensors which have a similar pattern. It is to be understood by a person having ordinary skill in the art or person skilled in the art that example of a device (e.g., computer system) and its sensors (e.g., say sensor S1 through S7) as described herein shall not be construed as limiting the scope of the present disclosure, and the system and method of the present disclosure can be implemented in computing device that is capable of obtaining various sensor data or time series data of the sensors associated with the computing device.

Embodiment of the present disclosure provide system and method for determining similar behavioral pattern between time series data obtained from multiple sensors and clustering thereof, wherein the similarity among cluster of sensors is determined based on their patterns and not based on their values as human vision is more sensible to pattern than the values while comparing two graphs (e.g., refer graphical representations depicted in FIGS. 3 and 4). More specifically, present disclosure provides system and method for clustering the similar behaving sensors based on their pattern over time.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

## Claims

1. A processor implemented method, comprising:
assigning, via one or more hardware processors (104), an alphanumeric code to each observation property of each sensor from a plurality of sensors, based on a plurality of quantized values to obtain a plurality of alphanumeric strings, wherein each of the plurality of sensors being associated with a corresponding time series data of memory consumption in the at least one computing device, wherein the at least one computing device is an Internet of Things (IoT) sensing device, wherein the IoT sensing device is one of a computer system, mobile communication device, router, television, water pump, aerial vehicle, and land vehicle, wherein assigning the alphanumeric code to the observation property of each sensor from the plurality of sensors comprises computing a gradient of change in value of the plurality of sensors based on a change observed in parameters, wherein the parameters for the computing system include memory consumption for read/write instructions, number of the read/write instructions at multiple time instances, and a time taken to execute the read/write instructions, wherein the parameters for the aerial vehicle include altitude, GPS locations, and wherein the parameters of the land vehicle include throttle position, torque and engine RPM (202);
performing, a dynamic programming technique executed by the one or more hardware processors (104), across the plurality of alphanumeric strings to identify a set of sensors from the plurality of sensors having similar time series pattern (204), wherein the plurality of alphanumeric strings of each sensor is compared with the plurality of alphanumeric strings obtained for other sensors from the plurality of sensors, wherein the comparison results in obtaining longest common subsequence (LCS) length between two sensors from the plurality of sensors and wherein the LCS length depicts the number of strings overlapping between the two sensors during comparison;
constructing, via the one or more hardware processors (104), a sparse matrix based on the set of sensors having similar time series pattern (206), wherein the sparse matrix refers to a matrix that comprises values of LCS length;
computing, via the one or more hardware processors, a similarity score for the set of sensors using an edit distance technique (208);
updating, via the one or more hardware processors (104), the sparse matrix with the similarity score for each pair of sensors from the set of sensors corresponding to the sparse matrix (210); and
clustering, via the one or more hardware processors (104), the set of sensors into one or more clusters based on a comparison of (i) the similarity score of each pair of sensors with (ii) a threshold , wherein the pairs of sensors having the similarity score greater than equal to the threshold are listed, wherein a tuple (Si, Sj) of three entities, namely sensor pair identifiers (IDs) for sensors Si and Sj, and the similarity score are defined for each non-zero entry of the sparse matrix, wherein the tuple (Si, Sj) are defined to be a connected pair of sensors when the similarity score greater than the threshold, and a label (λ) is assigned to each of the connected pair of sensors, wherein a depth first search technique is applied to the plurality of sensors to identify two or more sensors of the plurality of sensors that are connected to the sensor Si with the label (λ), wherein if (Si, Sj) and (Sj, Sk) are the connected pair of sensors, then (Si, Sk) is defined to be connected and the label (λ) is assigned to all of the sensors Si, Sj, and Sk, respectively, to obtain the one or more clusters of the plurality of sensors; and
determining, via the one or more hardware processors (104), the plurality of sensors having the similar time series pattern based on the one or more clusters (212).

2. The processor implemented method of claim 1, wherein the threshold is a pre-defined threshold or an empirically determined threshold.

3. The processor implemented method of claim 1, wherein the step of assigning an alphanumeric code to the observation property of each sensor from the plurality of sensors comprises:
obtaining a plurality of time series data from the plurality of sensors;
computing a first order derivative over time using the obtained plurality of time series data;
computing a gradient of change in value of the plurality of sensors over time based on the first order derivative;
deriving an angle of change in direction based on the gradient of change in value of the plurality of sensors over time, and converting the derived angle to a measurement unit; and
quantizing each time series data of the plurality of time series data into a plurality of bins based on the measurement unit to obtain the plurality of alphanumeric strings, each of the plurality of bins corresponds to a quantized value.

4. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
assign an alphanumeric code to each observation property of each sensor from a plurality of sensors, based on a plurality of quantized values to obtain a plurality of alphanumeric strings, wherein each of the plurality of sensors being associated with a corresponding time series data of memory consumption in the at least one computing device, wherein the at least one computing device is an Internet of Things (IoT) sensing device, wherein the IoT sensing device is one of a computer system, mobile communication device, router, television, water pump, aerial vehicle, and land vehicle, wherein the alphanumeric code is assigned to the observation property of each sensor from the plurality of sensors by computing a gradient of change in value of the plurality of sensors based on a change observed in parameters, wherein the parameters for the computing system include the memory consumption for read/write instructions, number of the read/write instructions at multiple time instances, and a time taken to execute the read/write instructions, wherein the parameters for the aerial vehicle include altitude, GPS locations, and wherein the parameters of the land vehicle include throttle position, torque and engine RPM;
perform a dynamic programming technique across the plurality of alphanumeric strings to identify a set of sensors from the plurality of sensors having similar time series pattern, wherein the plurality of alphanumeric strings of each sensor is compared with the plurality of alphanumeric strings obtained for other sensors from the plurality of sensors, wherein the comparison results in obtaining longest common subsequence (LCS) length between two sensors from the plurality of sensors and wherein the LCS length depicts the number of strings overlapping between the two sensors during comparison;
construct a sparse matrix based on the set of sensors having similar time series pattern, wherein the sparse matrix refers to a matrix that comprises values of LCS length;
compute a similarity score for the set of sensors using an edit distance technique;
update the sparse matrix with the similarity score for each pair of sensors from the set of sensors corresponding to the sparse matrix; and
cluster the set of sensors into one or more clusters based on a comparison of (i) the similarity score of each pair of sensors with (ii) a threshold, wherein the pairs of sensors having the similarity score greater than equal to the threshold are listed, wherein a tuple (Si, Sj) of three entities, namely sensor pair identifiers (IDs) for sensors Si and Sj, and the similarity score are defined for each non-zero entry of the sparse matrix, wherein the tuple (Si, Sj) are defined to be a connected pair of sensors when the similarity score greater than the threshold, and a label (λ) is assigned to each of the connected pair of sensors, wherein a depth first search technique is applied to the plurality of sensors to identify two or more sensors of the plurality of sensors that are connected to the sensor Si with the label (λ), wherein if (Si, Sj) and (Sj, Sk) are the connected pair of sensors, then (Si, Sk) is defined to be connected and the label (λ) is assigned to all of the sensors Si, Sj, and Sk, respectively, to obtain the one or more clusters of the plurality of sensors; and
determine the plurality of sensors having the similar time series pattern based on the one or more clusters.

5. The system of claim 4, wherein the threshold is a pre-defined threshold or an empirically determined threshold.

6. The system of claim 4, wherein the alphanumeric code is assigned to the observation property of each sensor from the plurality of sensors comprises by:
obtaining the plurality of time series data from the plurality of sensors;
computing a first order derivative over time using the obtained plurality of time series data;
computing a gradient of change in value of the plurality of sensors over time based on the first order derivative;
deriving an angle of change in direction based on the gradient of change in value of the plurality of sensors over time, and converting the derived angle to a measurement unit; and
quantizing each time series data of the plurality of time series data into a plurality of bins based on the measurement unit to obtain the plurality of alphanumeric strings, each of the plurality of bins corresponds to a quantized value.

7. One or more non-transitory machine readable information storage mediums comprising one or more instructions which when executed by one or more hardware processors (104) causes a method for determining similar behavioral pattern between time series data obtained from multiple sensors and clustering thereof by:
assigning, via one or more hardware processors (104), an alphanumeric code to each observation property of each sensor from a plurality of sensors, based on a plurality of quantized values to obtain a plurality of alphanumeric strings, wherein each of the plurality of sensors being associated with a corresponding time series data of memory consumption in the at least one computing device, wherein the at least one computing device is an Internet of Things (IoT) sensing device, wherein the IoT sensing device is one of a computer system, mobile communication device, router, television, water pump, aerial vehicle, and land vehicle, wherein the alphanumeric code is assigned to the observation property of each sensor from the plurality of sensors by computing a gradient of change in value of the plurality of sensors based on a change observed in parameters, wherein the parameters for the computing system include the memory consumption for read/write instructions, number of the read/write instructions at multiple time instances, and a time taken to execute the read/write instructions, wherein the parameters for the aerial vehicle include altitude, GPS locations, and wherein the parameters of the land vehicle include throttle position, torque and engine RPM (202);
performing, a dynamic programming technique executed by the one or more hardware processors (104), across the plurality of alphanumeric strings to identify a set of sensors from the plurality of sensors having similar time series pattern (204), wherein the plurality of alphanumeric strings of each sensor is compared with the plurality of alphanumeric strings obtained for other sensors from the plurality of sensors, wherein the comparison results in obtaining longest common subsequence (LCS) length between two sensors from the plurality of sensors and wherein the LCS length depicts the number of strings overlapping between the two sensors during comparison;
constructing, via the one or more hardware processors (104), a sparse matrix based on the set of sensors having similar time series pattern (206), wherein the sparse matrix refers to a matrix that comprises values of LCS length;
computing, via the one or more hardware processors, a similarity score for the set of sensors using an edit distance technique (208);
updating, via the one or more hardware processors (104), the sparse matrix with the similarity score for each pair of sensors from the set of sensors corresponding to the sparse matrix (210); and
clustering, via the one or more hardware processors (104), the set of sensors into one or more clusters based on a comparison of (i) the similarity score of each pair of sensors with (ii) a threshold wherein the pairs of sensors having the similarity score greater than equal to the threshold are listed, wherein a tuple (Si, Sj) of three entities, namely sensor pair identifiers (IDs) for sensors Si and Sj, and the similarity score are defined for each non-zero entry of the sparse matrix, wherein the tuple (Si, Sj) are defined to be a connected pair of sensors when the similarity score greater than the threshold, and a label (λ) is assigned to each of the connected pair of sensors, wherein a depth first search technique is applied to the plurality of sensors to identify two or more sensors of the plurality of sensors that are connected to the sensor Si with the label (λ), wherein if (Si, Sj) and (Sj, Sk) are the connected pair of sensors, then (Si, Sk) is defined to be connected and the label (λ) is assigned to all of the sensors Si, Sj, and Sk, respectively, to obtain the one or more clusters of the plurality of sensors (212); and
determine the plurality of sensors having the similar time series pattern based on the one or more clusters.

8. The one or more non-transitory machine readable information storage mediums of claim 7, wherein the threshold is a pre-defined threshold or an empirically determined threshold.

9. The one or more non-transitory machine readable information storage mediums of claim 7, wherein the step of assigning an alphanumeric code to each observation property of each sensor from the plurality of sensors comprises:
obtaining a plurality of time series data from the plurality of sensors;
computing a first order derivative over time using the obtained plurality of time series data;
computing a gradient of change in value of the plurality of sensors over time based on the first order derivative;
deriving an angle of change in direction based on the gradient of change in value of the plurality of sensors over time, and converting the derived angle to a measurement unit; and
quantizing each time series data of the plurality of time series data into a plurality of bins based on the measurement unit to obtain the plurality of alphanumeric strings, each of the plurality of bins corresponds to a quantized value.

## Patentansprüche

1. Prozessorimplementiertes Verfahren, umfassend:
Zuweisen, über einen oder mehrere Hardwareprozessoren (104), eines alphanumerischen Codes zu jeder Beobachtungseigenschaft jedes Sensors aus einer Mehrzahl von Sensoren, basierend auf einer Mehrzahl von quantisierten Werten, um eine Mehrzahl von alphanumerischen Zeichenketten zu erhalten, wobei jeder der Mehrzahl von Sensoren mit entsprechenden Zeitreihendaten des Speicherverbrauchs in der mindestens einen Rechenvorrichtung assoziiert ist, wobei die mindestens eine Rechenvorrichtung eine Internet-der-Dinge-(Internet of Things, IoT)-Erfassungsvorrichtung ist, wobei die IoT-Erfassungsvorrichtung eines von einem Computersystem, einer mobilen Kommunikationsvorrichtung, einem Router, einem Fernseher, einer Wasserpumpe, einem Luftfahrzeug und einem Landfahrzeug ist, wobei das Zuweisen des alphanumerischen Codes zu der Beobachtungseigenschaft jedes Sensors aus der Mehrzahl von Sensoren das Berechnen eines Gradienten der Änderung des Werts der Mehrzahl von Sensoren basierend auf einer beobachteten Änderung der Parameter umfasst, wobei die Parameter für das Rechensystem den Speicherverbrauch für Lese-/Schreibanweisungen, die Anzahl der Lese-/Schreibanweisungen zu mehreren Zeitpunkten und eine Zeit, die zum Ausführen der Lese-/Schreibanweisungen benötigt wird, beinhalten, wobei die Parameter für das Luftfahrzeug die Höhe, GPS-Positionen beinhalten und wobei die Parameter des Landfahrzeugs die Drosselposition, das Drehmoment und die Motordrehzahl (202) beinhalten;
Durchführen einer dynamischen Programmiertechnik, die von dem einen oder den mehreren Hardwareprozessoren (104) ausgeführt wird, über die Mehrzahl von alphanumerischen Zeichenketten, um einen Satz von Sensoren aus der Mehrzahl von Sensoren zu identifizieren, die ein ähnliches Zeitreihenmuster (204) aufweisen, wobei die Mehrzahl von alphanumerischen Zeichenketten jedes Sensors mit der Mehrzahl von alphanumerischen Zeichenketten verglichen wird, die für andere Sensoren aus der Mehrzahl von Sensoren erhalten werden, wobei der Vergleich zum Erhalten der längsten gemeinsamen Teilsequenz-(Longest Common Sequence, LCS)-Länge zwischen zwei Sensoren aus der Mehrzahl von Sensoren führt und wobei die LCS-Länge die Anzahl von Zeichenketten darstellt, die sich während des Vergleichs zwischen den zwei Sensoren überlappen;
Konstruieren, über den einen oder die mehreren Hardwareprozessoren (104), einer spärlichen Matrix basierend auf dem Satz von Sensoren, die ein ähnliches Zeitreihenmuster (206) aufweisen, wobei sich die spärliche Matrix auf eine Matrix bezieht, die Werte der LCS-Länge umfasst;
Berechnen, über den einen oder die mehreren Hardwareprozessoren, einer Ähnlichkeitsbewertung für den Satz von Sensoren unter Verwendung einer Editierdistanztechnik (208);
Aktualisieren, über den einen oder die mehreren Hardwareprozessoren (104), der spärlichen Matrix mit der Ähnlichkeitsbewertung für jedes Paar von Sensoren aus dem Satz von Sensoren, die der spärlichen Matrix (210) entsprechen; und
Clustern, über den einen oder die mehreren Hardwareprozessoren (104), des Satzes von Sensoren in ein oder mehrere Cluster basierend auf einem Vergleich von (i) der Ähnlichkeitsbewertung jedes Paars von Sensoren mit (ii) einem Schwellenwert, wobei die Paare von Sensoren, die die Ähnlichkeitsbewertung größer als gleich dem Schwellenwert aufweisen, aufgelistet sind, wobei ein Tupel (Si, Sj) von drei Entitäten, nämlich Sensorpaarkennungen (IDs) für Sensoren Si und Sj, und die Ähnlichkeitsbewertung für jeden Nicht-Null-Eintrag der spärlichen Matrix definiert sind, wobei das Tupel (Si, Sj) definiert ist, ein verbundenes Paar von Sensoren zu sein, wenn die Ähnlichkeitsbewertung größer als der Schwellenwert ist, und ein Label (λ) jedem des verbundenen Paars von Sensoren zugewiesen ist, wobei eine Tiefe-zuerst-Suchtechnik auf die Mehrzahl von Sensoren angewendet wird, um zwei oder mehr Sensoren der Mehrzahl von Sensoren zu identifizieren, die mit dem Sensor Si mit dem Label (λ) verbunden sind, wobei, wenn (Si, Sj) und (Sj, Sk) das verbundene Paar von Sensoren sind, dann (Si, Sk) definiert ist, verbunden zu sein, und das Label (λ) allen der Sensoren Si, Sj bzw. Sk zugewiesen ist, um das eine oder die mehreren Cluster der Mehrzahl von Sensoren zu erhalten; und
Bestimmen, über den einen oder die mehreren Hardwareprozessoren (104), der Mehrzahl von Sensoren, die das ähnliche Zeitreihenmuster aufweisen, basierend auf dem einen oder den mehreren Clustern (212).

2. Prozessorimplementiertes Verfahren nach Anspruch 1, wobei der Schwellenwert ein vordefinierter Schwellenwert oder ein empirisch bestimmter Schwellenwert ist.

3. Prozessorimplementiertes Verfahren nach Anspruch 1, wobei der Schritt des Zuweisens eines alphanumerischen Codes zu der Beobachtungseigenschaft jedes Sensors aus der Mehrzahl von Sensoren umfasst:
Erhalten einer Mehrzahl von Zeitreihendaten von der Mehrzahl von Sensoren;
Berechnen einer Ableitung erster Ordnung über die Zeit unter Verwendung der erhaltenen Mehrzahl von Zeitreihendaten;
Berechnen eines Gradienten der Änderung des Werts der Mehrzahl von Sensoren über die Zeit basierend auf der Ableitung erster Ordnung;
Ableiten eines Winkels der Änderung der Richtung basierend auf dem Gradienten der Änderung des Werts der Mehrzahl von Sensoren über die Zeit und Umwandeln des abgeleiteten Winkels in eine Messeinheit; und
Quantisieren jeder Zeitreihendaten der Mehrzahl von Zeitreihendaten in eine Mehrzahl von Bins basierend auf der Messeinheit, um die Mehrzahl von alphanumerischen Zeichenketten zu erhalten, wobei jedes der Mehrzahl von Bins einem quantisierten Wert entspricht.

4. System (100), umfassend:
einen Speicher (102), der Anweisungen speichert;
eine oder mehrere Kommunikationsschnittstellen (106); und
einen oder mehrere Hardwareprozessoren (104), die mit dem Speicher (102) über die eine oder die mehreren Kommunikationsschnittstellen (106) gekoppelt sind, wobei der eine oder die mehreren Hardwareprozessoren (104) durch die Anweisungen konfiguriert sind zum:
Zuweisen eines alphanumerischen Codes zu jeder Beobachtungseigenschaft jedes Sensors aus einer Mehrzahl von Sensoren, basierend auf einer Mehrzahl von quantisierten Werten, um eine Mehrzahl von alphanumerischen Zeichenketten zu erhalten, wobei jeder der Mehrzahl von Sensoren mit entsprechenden Zeitreihendaten des Speicherverbrauchs in der mindestens einen Rechenvorrichtung assoziiert ist, wobei die mindestens eine Rechenvorrichtung eine Internet-der-Dinge-(Internet of Things, IoT)-Erfassungsvorrichtung ist, wobei die IoT-Erfassungsvorrichtung eines von einem Computersystem, einer mobilen Kommunikationsvorrichtung, einem Router, einem Fernseher, einer Wasserpumpe, einem Luftfahrzeug und einem Landfahrzeug ist, wobei der alphanumerische Code der Beobachtungseigenschaft jedes Sensors aus der Mehrzahl von Sensoren durch Berechnen eines Gradienten der Änderung des Werts der Mehrzahl von Sensoren basierend auf einer beobachteten Änderung der Parameter zugewiesen wird, wobei die Parameter für das Rechensystem den Speicherverbrauch für Lese-/Schreibanweisungen, die Anzahl der Lese-/Schreibanweisungen zu mehreren Zeitpunkten und eine Zeit, die zum Ausführen der Lese-/Schreibanweisungen benötigt wird, beinhalten, wobei die Parameter für das Luftfahrzeug die Höhe, GPS-Positionen beinhalten und wobei die Parameter des Landfahrzeugs die Drosselposition, das Drehmoment und die Motordrehzahl beinhalten;
Durchführen einer dynamischen Programmiertechnik über die Mehrzahl von alphanumerischen Zeichenketten, um einen Satz von Sensoren aus der Mehrzahl von Sensoren zu identifizieren, die ein ähnliches Zeitreihenmuster aufweisen, wobei die Mehrzahl von alphanumerischen Zeichenketten jedes Sensors mit der Mehrzahl von alphanumerischen Zeichenketten verglichen wird, die für andere Sensoren aus der Mehrzahl von Sensoren erhalten werden, wobei der Vergleich zum Erhalten der längsten gemeinsamen Teilsequenz-(Longest Common Subsequence, LCS)-Länge zwischen zwei Sensoren aus der Mehrzahl von Sensoren führt und wobei die LCS-Länge die Anzahl von Zeichenketten darstellt, die sich während des Vergleichs zwischen den zwei Sensoren überlappen;
Konstruieren einer spärlichen Matrix basierend auf dem Satz von Sensoren, die ein ähnliches Zeitreihenmuster aufweisen, wobei sich die spärliche Matrix auf eine Matrix bezieht, die Werte der LCS-Länge umfasst;
Berechnen einer Ähnlichkeitsbewertung für den Satz von Sensoren unter Verwendung einer Editierdistanztechnik;
Aktualisieren der spärlichen Matrix mit der Ähnlichkeitsbewertung für jedes Paar von Sensoren aus dem Satz von Sensoren, die der spärlichen Matrix entsprechen; und
Clustern des Satzes von Sensoren in einen oder mehrere Cluster basierend auf einem Vergleich von (i) der Ähnlichkeitsbewertung jedes Paars von Sensoren mit (ii) einem Schwellenwert, wobei die Paare von Sensoren, die die Ähnlichkeitsbewertung größer als gleich dem Schwellenwert aufweisen, aufgelistet sind, wobei ein Tupel (Si, Sj) von drei Entitäten, nämlich Sensorpaarkennungen (IDs) für Sensoren Si und Sj, und die Ähnlichkeitsbewertung für jeden Nicht-Null-Eintrag der spärlichen Matrix definiert sind, wobei das Tupel (Si, Sj) definiert ist, ein verbundenes Paar von Sensoren zu sein, wenn die Ähnlichkeitsbewertung größer als der Schwellenwert ist, und ein Label (λ) jedem des verbundenen Paars von Sensoren zugewiesen ist, wobei eine Tiefe-zuerst-Suchtechnik auf die Mehrzahl von Sensoren angewendet wird, um zwei oder mehr Sensoren der Mehrzahl von Sensoren zu identifizieren, die mit dem Sensor Si mit dem Label (λ) verbunden sind, wobei, wenn (Si, Sj) und (Sj, Sk) das verbundene Paar von Sensoren sind, dann (Si, Sk) definiert ist, verbunden zu sein, und das Label (λ) allen der Sensoren Si, Sj bzw. Sk zugewiesen ist, um den einen oder die mehreren Cluster der Mehrzahl von Sensoren zu erhalten; und
Bestimmen der Mehrzahl von Sensoren, die das ähnliche Zeitreihenmuster aufweisen, basierend auf dem einen oder den mehreren Clustern.

5. System nach Anspruch 4, wobei der Schwellenwert ein vordefinierter Schwellenwert oder ein empirisch bestimmter Schwellenwert ist.

6. System nach Anspruch 4, wobei der alphanumerische Code der Beobachtungseigenschaft jedes Sensors aus der Mehrzahl von Sensoren zugewiesen ist durch:
Erhalten der Mehrzahl von Zeitreihendaten von der Mehrzahl von Sensoren;
Berechnen einer Ableitung erster Ordnung über die Zeit unter Verwendung der erhaltenen Mehrzahl von Zeitreihendaten;
Berechnen eines Gradienten der Änderung des Werts der Mehrzahl von Sensoren über die Zeit basierend auf der Ableitung erster Ordnung;
Ableiten eines Winkels der Änderung der Richtung basierend auf dem Gradienten der Änderung des Werts der Mehrzahl von Sensoren über die Zeit und Umwandeln des abgeleiteten Winkels in eine Messeinheit; und
Quantisieren jeder Zeitreihendaten der Mehrzahl von Zeitreihendaten in eine Mehrzahl von Bins basierend auf der Messeinheit, um die Mehrzahl von alphanumerischen Zeichenketten zu erhalten, wobei jedes der Mehrzahl von Bins einem quantisierten Wert entspricht.

7. Ein oder mehrere nichtflüchtige maschinenlesbare Informationsspeichermedien, die eine oder mehrere Anweisungen umfassen, die, wenn sie von einem oder mehreren Hardwareprozessoren (104) ausgeführt werden, ein Verfahren zum Bestimmen eines ähnlichen Verhaltensmusters zwischen Zeitreihendaten, die von mehreren Sensoren erhalten werden, und Clustern davon bewirken durch:
Zuweisen, über einen oder mehrere Hardwareprozessoren (104), eines alphanumerischen Codes zu jeder Beobachtungseigenschaft jedes Sensors aus einer Mehrzahl von Sensoren, basierend auf einer Mehrzahl von quantisierten Werten, um eine Mehrzahl von alphanumerischen Zeichenketten zu erhalten, wobei jeder der Mehrzahl von Sensoren mit entsprechenden Zeitreihendaten des Speicherverbrauchs in der mindestens einen Rechenvorrichtung assoziiert ist, wobei die mindestens eine Rechenvorrichtung eine Internet-der-Dinge-(Internet of Things, IoT)-Erfassungsvorrichtung ist, wobei die IoT-Erfassungsvorrichtung eines von einem Computersystem, einer mobilen Kommunikationsvorrichtung, einem Router, einem Fernseher, einer Wasserpumpe, einem Luftfahrzeug und einem Landfahrzeug ist, wobei der alphanumerische Code der Beobachtungseigenschaft jedes Sensors aus der Mehrzahl von Sensoren durch Berechnen eines Gradienten der Änderung des Werts der Mehrzahl von Sensoren basierend auf einer beobachteten Änderung der Parameter zugewiesen wird, wobei die Parameter für das Rechensystem den Speicherverbrauch für Lese-/Schreibanweisungen, die Anzahl der Lese-/Schreibanweisungen zu mehreren Zeitpunkten und eine Zeit, die zum Ausführen der Lese-/Schreibanweisungen benötigt wird, beinhalten, wobei die Parameter für das Luftfahrzeug die Höhe, GPS-Positionen beinhalten und wobei die Parameter des Landfahrzeugs die Drosselposition, das Drehmoment und die Motordrehzahl beinhalten (202);
Durchführen einer dynamischen Programmiertechnik, die von dem einen oder den mehreren Hardwareprozessoren (104) ausgeführt wird, über die Mehrzahl von alphanumerischen Zeichenketten, um einen Satz von Sensoren aus der Mehrzahl von Sensoren zu identifizieren, die ein ähnliches Zeitreihenmuster aufweisen (204), wobei die Mehrzahl von alphanumerischen Zeichenketten jedes Sensors mit der Mehrzahl von alphanumerischen Zeichenketten verglichen wird, die für andere Sensoren aus der Mehrzahl von Sensoren erhalten werden, wobei der Vergleich zum Erhalten der längsten gemeinsamen Teilsequenz-(Longest Common Subsequence, LCS)-Länge zwischen zwei Sensoren aus der Mehrzahl von Sensoren führt und wobei die LCS-Länge die Anzahl von Zeichenketten darstellt, die sich während des Vergleichs zwischen den zwei Sensoren überlappen;
Konstruieren, über den einen oder die mehreren Hardwareprozessoren (104), einer spärlichen Matrix basierend auf dem Satz von Sensoren, die ein ähnliches Zeitreihenmuster (206) aufweisen, wobei sich die spärliche Matrix auf eine Matrix bezieht, die Werte der LCS-Länge umfasst;
Berechnen, über den einen oder die mehreren Hardwareprozessoren, einer Ähnlichkeitsbewertung für den Satz von Sensoren unter Verwendung einer Editierdistanztechnik (208);
Aktualisieren, über den einen oder die mehreren Hardwareprozessoren (104), der spärlichen Matrix mit der Ähnlichkeitsbewertung für jedes Paar von Sensoren aus dem Satz von Sensoren, die der spärlichen Matrix (210) entsprechen; und
Clustern, über den einen oder die mehreren Hardwareprozessoren (104), des Satzes von Sensoren in ein oder mehrere Cluster basierend auf einem Vergleich von (i) der Ähnlichkeitsbewertung jedes Paars von Sensoren mit (ii) einem Schwellenwert, wobei die Paare von Sensoren, die die Ähnlichkeitsbewertung größer als gleich dem Schwellenwert aufweisen, aufgelistet sind, wobei ein Tupel (Si, Sj) von drei Entitäten, nämlich Sensorpaarkennungen (IDs) für Sensoren Si und Sj, und die Ähnlichkeitsbewertung für jeden Nicht-Null-Eintrag der spärlichen Matrix definiert sind, wobei das Tupel (Si, Sj) definiert ist, ein verbundenes Paar von Sensoren zu sein, wenn die Ähnlichkeitsbewertung größer als der Schwellenwert ist, und ein Label (λ) jedem des verbundenen Paars von Sensoren zugewiesen ist, wobei eine Tiefe-zuerst-Suchtechnik auf die Mehrzahl von Sensoren angewendet wird, um zwei oder mehr Sensoren der Mehrzahl von Sensoren zu identifizieren, die mit dem Sensor Si mit dem Label (λ) verbunden sind, wobei, wenn (Si, Sj) und (Sj, Sk) das verbundene Paar von Sensoren sind, dann (Si, Sk) definiert ist, verbunden zu sein, und das Label (λ) allen der Sensoren Si, Sj bzw. Sk zugewiesen ist, um das eine oder die mehreren Cluster der Mehrzahl von Sensoren (212) zu erhalten; und
Bestimmen der Mehrzahl von Sensoren, die das ähnliche Zeitreihenmuster aufweisen, basierend auf dem einen oder den mehreren Clustern.

8. Ein oder mehrere nichtflüchtige maschinenlesbare Informationsspeichermedien nach Anspruch 7, wobei der Schwellenwert ein vordefinierter Schwellenwert oder ein empirisch bestimmter Schwellenwert ist.

9. Ein oder mehrere nichtflüchtige maschinenlesbare Informationsspeichermedien nach Anspruch 7, wobei der Schritt des Zuweisens eines alphanumerischen Codes zu jeder Beobachtungseigenschaft jedes Sensors aus der Mehrzahl von Sensoren umfasst:
Erhalten einer Mehrzahl von Zeitreihendaten von der Mehrzahl von Sensoren;
Berechnen einer Ableitung erster Ordnung über die Zeit unter Verwendung der erhaltenen Mehrzahl von Zeitreihendaten;
Berechnen eines Gradienten der Änderung des Werts der Mehrzahl von Sensoren über die Zeit basierend auf der Ableitung erster Ordnung;
Ableiten eines Winkels der Änderung der Richtung basierend auf dem Gradienten der Änderung des Werts der Mehrzahl von Sensoren über die Zeit und Umwandeln des abgeleiteten Winkels in eine Messeinheit; und
Quantisieren jeder Zeitreihendaten der Mehrzahl von Zeitreihendaten in eine Mehrzahl von Bins basierend auf der Messeinheit, um die Mehrzahl von alphanumerischen Zeichenketten zu erhalten, wobei jedes der Mehrzahl von Bins einem quantisierten Wert entspricht.

## Revendications

1. Procédé mis en oeuvre par processeur, comprenant :
l'attribution, par l'intermédiaire d'un ou plusieurs processeurs matériels (104), d'un code alphanumérique à chaque propriété d'observation de chaque capteur parmi une pluralité de capteurs, sur la base d'une pluralité de valeurs quantifiées pour obtenir une pluralité de chaînes alphanumériques, dans lequel chacun de la pluralité de capteurs est associé à des données de série temporelle correspondantes de consommation de mémoire dans l'au moins un dispositif informatique, dans lequel l'au moins un dispositif informatique est un dispositif de détection d'Internet des objets (IoT), dans lequel le dispositif de détection d'IoT est l'un parmi un système informatique, un dispositif de communication mobile, un routeur, une télévision, une pompe à eau, un véhicule aérien et un véhicule terrestre, dans lequel l'attribution du code alphanumérique à la propriété d'observation de chaque capteur parmi la pluralité de capteurs comprend le calcul d'un gradient de changement de valeur de la pluralité de capteurs sur la base d'un changement observé de paramètres, dans lequel les paramètres pour le système informatique incluent une consommation de mémoire pour des instructions de lecture/écriture, un nombre d'instructions de lecture/écriture à de multiples instances temporelles, et un temps pris pour exécuter les instructions de lecture/écriture, dans lequel les paramètres pour le véhicule aérien incluent une altitude, des emplacements GPS, et dans lequel les paramètres du véhicule terrestre incluent une position de papillon des gaz, un couple et un régime moteur (202) ;
la réalisation d'une technique de programmation dynamique exécutée par les un ou plusieurs processeurs matériels (104), à travers la pluralité de chaînes alphanumériques pour identifier un ensemble de capteurs parmi la pluralité de capteurs ayant un motif de série temporelle similaire (204), dans lequel la pluralité de chaînes alphanumériques de chaque capteur est comparée à la pluralité de chaînes alphanumériques obtenues pour d'autres capteurs parmi la pluralité de capteurs, dans lequel la comparaison résulte en l'obtention de la longueur de la plus longue sous-séquence commune (LCS) entre deux capteurs parmi la pluralité de capteurs et dans lequel la longueur de LCS représente le nombre de chaînes se chevauchant entre les deux capteurs pendant la comparaison ;
la construction, via les un ou plusieurs processeurs matériels (104), d'une matrice clairsemée sur la base de l'ensemble de capteurs ayant un motif de série temporelle similaire (206), dans lequel la matrice clairsemée se réfère à une matrice qui comprend des valeurs de longueur de LCS ;
le calcul, via les un ou plusieurs processeurs matériels, d'un score de similarité pour l'ensemble de capteurs en utilisant une technique de distance d'édition (208) ;
la mise à jour, via les un ou plusieurs processeurs matériels (104), de la matrice clairsemée avec le score de similarité pour chaque paire de capteurs parmi l'ensemble de capteurs correspondant à la matrice clairsemée (210) ; et
le regroupement, via les un ou plusieurs processeurs matériels (104), de l'ensemble de capteurs en un ou plusieurs groupes sur la base d'une comparaison (i) du score de similarité de chaque paire de capteurs avec (ii) un seuil, dans lequel les paires de capteurs ayant le score de similarité supérieur ou égal au seuil sont répertoriées, dans lequel un tuple (Si, Sj) de trois entités, à savoir des identifiants (ID) de paire de capteurs pour les capteurs Si et Sj, et le score de similarité sont définis pour chaque entrée non nulle de la matrice clairsemée, dans lequel le tuple (Si, Sj) est défini comme étant une paire connectée de capteurs lorsque le score de similarité est supérieur au seuil, et une étiquette (λ) est attribuée à chacun de la paire connectée de capteurs, dans lequel une première technique de recherche de profondeur est appliquée à la pluralité de capteurs pour identifier deux capteurs ou plus de la pluralité de capteurs qui sont connectés au capteur Si avec l'étiquette (λ), dans lequel si (Si, Sj) et (Sj, Sk) sont la paire connectée de capteurs, alors (Si, Sk) est défini comme étant connecté et l'étiquette (λ) est attribuée à tous les capteurs Si, Sj et Sk, respectivement, pour obtenir les un ou plusieurs groupes de la pluralité de capteurs ; et
la détermination, via les un ou plusieurs processeurs matériels (104), de la pluralité de capteurs ayant le motif de série temporelle similaire sur la base des un ou plusieurs groupes (212).

2. Procédé mis en oeuvre par processeur selon la revendication 1, dans lequel le seuil est un seuil prédéfini ou un seuil déterminé empiriquement.

3. Procédé mis en oeuvre par processeur selon la revendication 1, dans lequel l'étape d'attribution d'un code alphanumérique à la propriété d'observation de chaque capteur de la pluralité de capteurs comprend :
l'obtention d'une pluralité de données de série temporelle à partir de la pluralité de capteurs ;
le calcul d'une dérivée de premier ordre dans le temps en utilisant la pluralité de données de série temporelle obtenues ;
le calcul d'un gradient de changement de valeur de la pluralité de capteurs dans le temps sur la base de la dérivée de premier ordre ;
la dérivation d'un angle de changement de direction sur la base du gradient de changement de valeur de la pluralité de capteurs dans le temps, et la conversion de l'angle dérivé en une unité de mesure ; et
la quantification de chaque donnée de série temporelle de la pluralité de données de série temporelle en une pluralité de cases sur la base de l'unité de mesure pour obtenir la pluralité de chaînes alphanumériques, chacune de la pluralité de cases correspondant à une valeur quantifiée.

4. Système (100), comprenant :
une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :
attribuer un code alphanumérique à chaque propriété d'observation de chaque capteur parmi une pluralité de capteurs, sur la base d'une pluralité de valeurs quantifiées pour obtenir une pluralité de chaînes alphanumériques, dans lequel chacun de la pluralité de capteurs est associé à des données de série temporelle correspondantes de consommation de mémoire dans l'au moins un dispositif informatique, dans lequel l'au moins un dispositif informatique est un dispositif de détection d'Internet des objets (IoT), dans lequel le dispositif de détection d'IoT est l'un parmi un système informatique, un dispositif de communication mobile, un routeur, une télévision, une pompe à eau, un véhicule aérien et un véhicule terrestre, dans lequel le code alphanumérique est attribué à la propriété d'observation de chaque capteur parmi la pluralité de capteurs en calculant un gradient de changement de valeur de la pluralité de capteurs sur la base d'un changement observé de paramètres, dans lequel les paramètres pour le système informatique incluent la consommation de mémoire pour des instructions de lecture/écriture, un nombre d'instructions de lecture/écriture à de multiples instances temporelles, et un temps pris pour exécuter les instructions de lecture/écriture, dans lequel les paramètres pour le véhicule aérien incluent une altitude, des emplacements GPS, et dans lequel les paramètres du véhicule terrestre incluent une position de papillon des gaz, un couple et un régime moteur ;
réaliser une technique de programmation dynamique à travers la pluralité de chaînes alphanumériques pour identifier un ensemble de capteurs parmi la pluralité de capteurs ayant un motif de série temporelle similaire, dans lequel la pluralité de chaînes alphanumériques de chaque capteur est comparée à la pluralité de chaînes alphanumériques obtenues pour d'autres capteurs parmi la pluralité de capteurs, dans lequel la comparaison résulte en l'obtention de la longueur de la plus longue sous-séquence commune (LCS) entre deux capteurs parmi la pluralité de capteurs et dans lequel la longueur de LCS représente le nombre de chaînes se chevauchant entre les deux capteurs pendant la comparaison ;
construire une matrice clairsemée sur la base de l'ensemble de capteurs ayant un motif de série temporelle similaire, dans lequel la matrice clairsemée se réfère à une matrice qui comprend des valeurs de longueur de LCS ;
calculer un score de similarité pour l'ensemble de capteurs en utilisant une technique de distance d'édition ;
mettre à jour la matrice clairsemée avec le score de similarité pour chaque paire de capteurs parmi l'ensemble de capteurs correspondant à la matrice clairsemée ; et
regrouper l'ensemble de capteurs en un ou plusieurs groupes sur la base d'une comparaison de (i) le score de similarité de chaque paire de capteurs avec (ii) un seuil, dans lequel les paires de capteurs ayant le score de similarité supérieur ou égal au seuil sont répertoriées, dans lequel un tuple (Si, Sj) de trois entités, à savoir des identifiants (ID) de paire de capteurs pour les capteurs Si et Sj, et le score de similarité sont définis pour chaque entrée non nulle de la matrice clairsemée, dans lequel le tuple (Si, Sj) est défini comme étant une paire de capteurs connectée lorsque le score de similarité est supérieur au seuil, et une étiquette (λ) est attribuée à chacun de la paire de capteurs connectée, dans lequel une première technique de recherche de profondeur est appliquée à la pluralité de capteurs pour identifier deux capteurs ou plus de la pluralité de capteurs qui sont connectés au capteur Si avec l'étiquette (λ), dans lequel si (Si, Sj) et (Sj, Sk) sont la paire de capteurs connectée, alors (Si, Sk) est défini comme étant connecté et l'étiquette (λ) est attribuée à tous les capteurs Si, Sj et Sk, respectivement, pour obtenir les un ou plusieurs groupes de la pluralité de capteurs ; et
déterminer la pluralité de capteurs ayant le motif de série temporelle similaire sur la base des un ou plusieurs groupes.

5. Système selon la revendication 4, dans lequel le seuil est un seuil prédéfini ou un seuil déterminé empiriquement.

6. Système selon la revendication 4, dans lequel le code alphanumérique est attribué à la propriété d'observation de chaque capteur de la pluralité de capteurs en :
obtenant la pluralité de données de série temporelle à partir de la pluralité de capteurs ;
calculant une dérivée de premier ordre dans le temps en utilisant la pluralité de données de série temporelle obtenues ;
calculant un gradient de changement de valeur de la pluralité de capteurs dans le temps sur la base de la dérivée de premier ordre ;
dérivant un angle de changement de direction sur la base du gradient de changement de valeur de la pluralité de capteurs dans le temps, et convertissant l'angle dérivé en une unité de mesure ; et
quantifiant chaque donnée de série temporelle de la pluralité de données de série temporelle en une pluralité de cases sur la base de l'unité de mesure pour obtenir la pluralité de chaînes alphanumériques, chacune de la pluralité de cases correspondant à une valeur quantifiée.

7. Un ou plusieurs supports de stockage d'informations lisibles par machine non transitoires comprenant une ou plusieurs instructions qui, lorsqu'elles sont exécutées par un ou plusieurs processeurs matériels (104), amènent un procédé à déterminer un modèle comportemental similaire entre des données de série temporelle obtenues à partir de multiples capteurs et à regrouper celles-ci en :
attribuant, par l'intermédiaire d'un ou plusieurs processeurs matériels (104), un code alphanumérique à chaque propriété d'observation de chaque capteur d'une pluralité de capteurs, sur la base d'une pluralité de valeurs quantifiées pour obtenir une pluralité de chaînes alphanumériques, dans lequel chacun de la pluralité de capteurs est associé à des données de série temporelle correspondantes de consommation de mémoire dans l'au moins un dispositif informatique, dans lequel l'au moins un dispositif informatique est un dispositif de détection d'Internet des objets (IoT), dans lequel le dispositif de détection d'IoT est l'un parmi un système informatique, un dispositif de communication mobile, un routeur, une télévision, une pompe à eau, un véhicule aérien et un véhicule terrestre, dans lequel le code alphanumérique est attribué à la propriété d'observation de chaque capteur de la pluralité de capteurs en calculant un gradient de changement de valeur de la pluralité de capteurs sur la base d'un changement observé de paramètres, dans lequel les paramètres pour le système informatique incluent la consommation de mémoire pour des instructions de lecture/écriture, le nombre d'instructions de lecture/écriture à de multiples instances de temps, et un temps pris pour exécuter les instructions de lecture/écriture, dans lequel les paramètres pour le véhicule aérien incluent l'altitude, des emplacements GPS, et dans lequel les paramètres du véhicule terrestre incluent la position du papillon des gaz, le couple et le régime du moteur (202) ;
réalisant une technique de programmation dynamique exécutée par les un ou plusieurs processeurs matériels (104), à travers la pluralité de chaînes alphanumériques pour identifier un ensemble de capteurs parmi la pluralité de capteurs ayant un motif de série temporelle similaire (204), dans lequel la pluralité de chaînes alphanumériques de chaque capteur est comparée à la pluralité de chaînes alphanumériques obtenues pour d'autres capteurs parmi la pluralité de capteurs, dans lequel la comparaison résulte en l'obtention de la longueur de la plus longue sous-séquence commune (LCS) entre deux capteurs parmi la pluralité de capteurs et dans lequel la longueur de LCS représente le nombre de chaînes se chevauchant entre les deux capteurs pendant la comparaison ;
la construction, via les un ou plusieurs processeurs matériels (104), d'une matrice clairsemée sur la base de l'ensemble de capteurs ayant un motif de série temporelle similaire (206), dans lequel la matrice clairsemée se réfère à une matrice qui comprend des valeurs de longueur de LCS ;
le calcul, via les un ou plusieurs processeurs matériels, d'un score de similarité pour l'ensemble de capteurs en utilisant une technique de distance d'édition (208) ;
la mise à jour, via les un ou plusieurs processeurs matériels (104), de la matrice clairsemée avec le score de similarité pour chaque paire de capteurs parmi l'ensemble de capteurs correspondant à la matrice clairsemée (210) ; et
le regroupement, via les un ou plusieurs processeurs matériels (104), de l'ensemble de capteurs en un ou plusieurs groupes sur la base d'une comparaison de (i) le score de similarité de chaque paire de capteurs avec (ii) un seuil, dans lequel les paires de capteurs ayant le score de similarité supérieur ou égal au seuil sont répertoriées, dans lequel un tuple (Si, Sj) de trois entités, à savoir des identifiants (ID) de paire de capteurs pour les capteurs Si et Sj, et le score de similarité sont définis pour chaque entrée non nulle de la matrice clairsemée, dans lequel le tuple (Si, Sj) est défini comme étant une paire de capteurs connectée lorsque le score de similarité est supérieur au seuil, et une étiquette (λ) est attribuée à chacun de la paire de capteurs connectée, dans lequel une première technique de recherche de profondeur est appliquée à la pluralité de capteurs pour identifier deux capteurs ou plus de la pluralité de capteurs qui sont connectés au capteur Si avec l'étiquette (λ), dans lequel si (Si, Sj) et (Sj, Sk) sont la paire de capteurs connectée, alors (Si, Sk) est défini comme étant connecté et l'étiquette (λ) est attribuée à tous les capteurs Si, Sj et Sk, respectivement, pour obtenir les un ou plusieurs groupes de la pluralité de capteurs (212) ; et
déterminer la pluralité de capteurs ayant le motif de série temporelle similaire sur la base des un ou plusieurs groupes.

8. Un ou plusieurs supports de stockage d'informations lisibles par machine non transitoires selon la revendication 7, dans lequel le seuil est un seuil prédéfini ou un seuil déterminé empiriquement.

9. Un ou plusieurs supports de stockage d'informations lisibles par machine non transitoires selon la revendication 7, dans lequel l'étape d'attribution d'un code alphanumérique à chaque propriété d'observation de chaque capteur de la pluralité de capteurs comprend :
l'obtention d'une pluralité de données de série temporelle à partir de la pluralité de capteurs ;
le calcul d'une dérivée de premier ordre dans le temps en utilisant la pluralité de données de série temporelle obtenues ;
le calcul d'un gradient de changement de valeur de la pluralité de capteurs dans le temps sur la base de la dérivée de premier ordre ;
la dérivation d'un angle de changement de direction sur la base du gradient de changement de valeur de la pluralité de capteurs dans le temps, et la conversion de l'angle dérivé en une unité de mesure ; et
la quantification de chaque donnée de série temporelle de la pluralité de données de série temporelle en une pluralité de cases sur la base de l'unité de mesure pour obtenir la pluralité de chaînes alphanumériques, chacune de la pluralité de cases correspondant à une valeur quantifiée.
